# EUROPÄISCHE PATENTSCHRIFT

(11) **EP 1 451 239 B1**
(45) Veröffentlichungstag und Bekanntmachung des Hinweises auf die Patenterteilung: **02.04.2008**
(21) Anmeldenummer: 02790402.8
(22) Anmeldetag: 19.11.2002
(51) Int. Cl.: C08G 18/10, B01D 11/04

(54) **VERFAHEN ZUR HERSTELLUNG VON ISOCYANATGRUPPEN UND URETHANGRUPPEN ENTHALTENDEN PREPOLYMEREN**
METHOD FOR PRODUCING PREPOLYMERS CONTAINING ISOCYANATE GROUPS AND URETHANE GROUPS
PROCEDE DE PRODUCTION DE PREPOLYMERES CONTENANT DES GROUPES ISOCYANATE ET DES GROUPES URETHANNE

(30) Priorität: 27.11.2001 DE 10157768
(43) Veröffentlichungstag der Anmeldung: 01.09.2004
(73) Patentinhaber: BASF SE, 67056 Ludwigshafen (DE)
(72) Erfinder: BARTZ, Thomas, 85259 Wiedenzhausen (DE); SCHMIDT, Hans, Ulrich, 86947 Petzenhausen (DE); TIETZE, Katrin, 01993 Schipkau (DE); OCHSE, Michael, 34260 Kaufungen (DE); THIELE, Kai, 01987 Schwarzheide (DE); MURRAR, Imbridt, 01968 Senftenberg (DE)
(86) Internationale Anmeldenummer: PCT/EP2002/012931
(87) Internationale Veröffentlichungsnummer: WO 2003/046040

(56) Entgegenhaltungen:
- EP-A- 1 138 707
- EP-A- 1 241 197
- DE-A- 19 939 840

## Beschreibung

Die Erfindung betrifft Verfahren zur Herstellung von Isocyanatgruppen und Urethangruppen enthaltenden Prepolymeren, auch als NCO-Prepolymere bezeichnet, und die durch dieses Verfahren erhältlichen Prepolymere.

Prepolymere mit Urethangruppen und endständigen Isocyanatgruppen sind wichtige Zwischenprodukte für die Herstellung von Polyurethanen. Sie sind seit langem bekannt und vielfach in der Literatur beschrieben.

Ihre Herstellung erfolgt durch Umsetzung von Verbindungen mit mindestens zwei mit Isocyanatgruppen reaktiven Wasserstoffatomen mit einem Überschuss an Polyisocyanaten. Bei dieser Reaktion verbleiben zumeist nicht umgesetzte Monomere im Prepolymer. Dies wird als Nachteil angesehen, da es die Anwendbarkeit der Prepolymere einschränkt. So haben einige der Monomere, wie beispielsweise das Toluylendiisocyanat (TDI) oder die aliphatischen Diisocyanate, einen niedrigen Dampfdruck und eine hohe Toxizität. Im Falle der Isomere des Diphenylmethandiisocyanats (MDI) können die Monomere im Prepolymer auskristallisieren.

Es sind eine Reihe von Maßnahmen bekannt, durch die der Gehalt an Monomeren im Prepolymer gesenkt werden kann.

In US-A-6,133,415 wird die Entmonomerisierung von Isocyanatgruppen und Urethangruppen enthaltenden Prepolymeren mittels Flüssig-Flüssig-Extraktion beschrieben. Dieses Verfahren ist jedoch aufwendig, außerdem müssen die extrahierten Monomere aus der Extraktionsflüssigkeit abgetrennt werden.

In DE-A-196 16 046 wird ein Verfahren zur Abtrennung von Monomeren oder Hilfsstoffen aus organischen Polymeren beschrieben, bei dem die Monomere mittels verdichtetem Kohlendioxid aus den Polymeren extrahiert werden. Bei der Entmonomerisierung von Isocyanatgruppen und Urethangruppen enthaltenden Prepolymeren, insbesondere solchen auf Basis von MDI, kommt es jedoch häufig zu einer Schädigung des Produkts, beispielsweise zu einer Verfärbung oder einem Aufbau des Molekulargewichts. Außerdem verbleibt zumeist Kohlendioxid im Produkt, was zu Problemen bei der Weiterverarbeitung führen kann.

Eine weitere Möglichkeit der Abtrennung der Monomeren ist die Destillation. Da die Isocyanatgruppen und Urethangruppen enthaltenden Prepolymeren zumeist nicht temperaturstabil sind, erfolgt die Destillation vorzugsweise unter Verwendung von Schleppmitteln oder vorzugsweise unter Vakuum, insbesondere mittels Dünnschichtverdampfer.

In WO 97/46603 wird ein Verfahren zur Entfernung von monomeren Diisocyanaten aus Isocyanatgruppen und Urethangruppen enthaltenden Prepolymeren durch Destillation beschrieben, bei dem eine Mischung aus organischen Lösungsmitteln mit unterschiedlichen Siedepunkten als Schleppmittel eingesetzt wird. Der Einsatz von Schleppmitteln verteuert jedoch das Verfahren, außerdem muss das Monomere vor seiner Wiederverwendung erst vom Schleppmittel getrennt werden.

EP-A-316 738 beschreibt ein Verfahren zur Herstellung von Isocyanatgruppen und Urethangruppen enthaltenden Prepolymeren auf Basis von TDI mit geringem Anteil an Monomeren, bei dem das Prepolymere nach der Herstellung einer Dünnschichtdestillation unterworfen wird. In JP 9053522 wird ein Verfahren zur Herstellung von Isocyanatgruppen und Urethangruppen enthaltenden Prepolymeren beschrieben, die nach ihrer Herstellung ebenfalls einer Dünnschichtdestillation unterworfen werden. JP 08176252 und JP 08176253 beschreiben Isocyanatgruppen und Urethangruppen enthaltende Prepolymere mit einem Gehalt an monomerem MDI von 0,15 Gew.-%, die nach ihrer Herstellung einer Vakuumdestillation unterworfen wurden.

US-A-5,202,001 beschreibt ein Verfahren zur Entmonomerisierung von Isocyanatgruppen und Urethangruppen enthaltenden Prepolymeren, insbesondere solchen auf Basis von TDI, durch Dünnschichtverdampfung in Gegenwart von Inertgasen. Damit soll die Rückspaltung der Prepolymere unterdrückt werden. In US 5,115,071 werden verschiedene Möglichkeiten der Entmonomerisierung von Isocyanatgruppen und Urethangruppen enthaltenden Prepolymeren beschrieben. In einem Beispiel wird ein Isocyanatgruppen und Urethangruppen enthaltendes Prepolymer auf Basis von TDI durch Dünnschicht-destillation behandelt.

DE-A-199 398 40 beschreibt ein Verfahren zur Entmonomerisierung von Prepolymeren auf Basis von TDI und Polyesteralkoholen mittels Kurzwegverdampfer.

Besonders bei Prepolymeren, die auf Basis von MDI hergestellt wurden, insbesondere bei einem hohen Anteil des 2,4'-Isomeren, gestaltet sich die Abtrennung der Monomeren auf Grund des hohen Siedepunkts des MDI bei einer herkömmlichen Dünnschichttemperatur schwierig.

Bei Extraktionsverfahren oder einer Destillation unter Verwendung von Schleppmitteln fällt das abgetrennte Monomere gemeinsam mit anderen Stoffen an und muss, bevor es erneut verwendet werden kann, in einem zusätzlichen Verfahrensschritt von diesen abgetrennt werden.

Aufgabe der Erfindung war es, ein einfaches und schonendes Verfahren zur Entmonomerisierung von Isocyanatgruppen und Urethangruppen enthaltenden Prepolymeren zu entwickeln, das insbesondere für die Aufarbeitung von Isocyanatgruppen und Urethangruppen enthaltenden Prepolymeren auf Basis von 2,4'-MDI geeignet ist und bei dem das abgetrennte Monomere in einer solchen Form anfällt, dass es ohne zusätzliche Reinigung einer erneuten Verarbeitung zugeführt werden kann.

Diese Aufgabe konnte gelöst werden durch die Destillation des Isocyanatgruppen und Urethangruppen enthaltenden Prepolymeren mittels eines Kurzwegverdampfers.

Gegenstand der Erfindung ist demzufolge ein Verfahren zur Herstellung von Isocyanatgruppen und Urethangruppen enthaltenden Prepolymeren, umfassend die Schritte
a) Reaktion von 2,4'-Diphenylmethandiisocyanat oder Mischungen von 2,4'-Diphenylmethandiisocyanat und 4,4'-Diphenylmethandiisocyanat oder Mischungen von 2,4'-, 2,2'- und 4,4'-Diphenylmethandiisocyanat und Polyphenyl-Polymethylenpolyisocyanaten mit einem stöchiometrischen Unterschuss eines Polyetheralkohols,
b) Destillation des Reaktionsprodukts aus Schritt a) mittels eines Kurzwegverdampfers.

Gegenstand der Erfindung ist weiterhin ein Verfahren zur Entmonomerisierung von Isocyanatgruppen und Urethangruppen enthaltenden Prepolymeren, dadurch gekennzeichnet, dass das Prepolymere nach der Umsetzung einer Destillation mittels eines Kurzwegverdampfers unterworfen wird.

Gegenstand der Erfindung sind weiterhin Isocyanatgruppen und Urethangruppen enthaltende Prepolymere auf Basis von MDI, herstellbar nach dem erfindungsgemäßen Verfahren.

Gegenstand der Erfindung sind weiterhin Isocyanatgruppen und Urethangruppen enthaltende Prepolymere auf Basis von 2,4'-MDI mit einem NCO-Gehalt im Bereich zwischen 30 bis 1 Gew.-% mit einem Gehalt an freiem MDI von kleiner 0,1 Gew.-% und vorzugsweise 0,05 Gew.-%, jeweils bezogen auf das Gewicht des Prepolymeren.

Kurzwegverdampfer sind bekannt. Sie werden beispielsweise von der Firma VTA Verfahrenstechnische Anlagen GmbH Deggendorf, QVF Engineering GmbH Leipzig oder UCI GmbH Alzenau-Hörstein angeboten. Eine Beschreibung eines Kurzwegverdampfers findet sich beispielsweise in dem Artikel "Kurzweg-Destillation im Labor" von Norbert Kukla, GT Labor-Fachzeitschrift 6/98, Seiten 616 bis 620.

Die Kurzwegverdampfer basieren auf dem Prinzip der Dünnschichtverdampfung. Im Gegensatz zu Dünnschichtverdampfern, wo die aus der Flüssigkeit austretenden Brüden nach oben aus dem Verdampfer abgeführt und in einem externen Kondensator kondensiert werden, besitzen die Kurzwegverdampfer einen zentral angeordneten Innenkondensator. Die aus dem Flüssigkeitsfilm austretenden Dämpfe treffen auf den Innenkondensator, kondensieren dort und laufen nach unten ab. Der große Querschnitt, der für den Transport der Dämpfe vom Verdampfer zum Innenkondensator zur Verfügung steht, sowie der geringe Abstand von der Verdampfung zur Kondensation bewirken nur geringe Druckabfälle im Verdampfer.

Im Gegensatz zum Dünnschichtverdampfer, bei dem nur ein Vakuum bis 1 mbar erreicht werden kann, ist mit einem Kurzwegverdampfer ein Vakuum bis 0,001 mbar erreichbar.

Mit der erfindungsgemäßen Verwendung eines Kurzwegverdampfers zur Entmonomerisierung der Prepolymere ist es erstmalig möglich, Isocyanatgruppen und Urethangruppen enthaltende Prepolymere auf Basis von MDI mit einem Gehalt an freiem MDI von kleiner 0,1 Gew.-%, und vorzugsweise 0,05 Gew.-%, jeweils bezogen auf das Gewicht des Prepolymeren, bereitzustellen.

Daher wird das erfindungsgemäße Verfahren auch vorzugsweise bei der Herstellung von Isocyanatgruppen und Urethangruppen enthaltenden Prepolymeren eingesetzt, bei deren Herstellung MDI als Polyisocyanat eingesetzt wird. Überraschenderweise ist es mit dem erfindungsgemäßen Verfahren möglich, das MDI praktisch vollständig aus dem NCO-Prepolymer abzutrennen. Durch die Auswahl der Bedingungen für die Destillation im Kurzwegverdampfer ist es weiterhin möglich, die Abtrennung des MDI mit hoher Selektivität vorzunehmen.

Die Destillation im Kurzwegverdampfer wird vorzugsweise bei einem Vakuum von 10 bis 10⁻³ mbar, einer Temperatur im Vorlagebehälter von 30 bis 90°C, einer Temperatur im Verdampfer von 50 bis 210°C und einer Temperatur im Kondensator von 15 bis 55°C durchgeführt. Bei diesen Bedingungen ist eine optimale Entfernung der nicht umgesetzten Monomere gewährleistet, ohne dass es zu einer Schädigung, insbesondere einem Abbau, des Prepolymeren kommt. Das abdestillierte monomere Diisocyanat weist ebenfalls keinerlei Schädigung auf und kann ohne weitere Reinigungsschritte wieder zu Isocyanatgruppen und Urethangruppen enthaltenden Prepolymeren verarbeitet werden. In der technischen Ausgestaltung des Verfahrens kann das abdestillierte monomere Diisocyanat direkt dem Lagertank oder dem Vorlagebehälter, aus dem das Diisocyanat für die Herstellung der Prepolymere entnommen wird, zugeführt werden.

Bei Verwendung eines Kurzwegverdampfers in Laborausführung wird vorzugsweise bei einer Durchflussgeschwindigkeit von 1 bis 0,1 1/h und einer Rührgeschwindigkeit von 300 bis 500 U/min gearbeitet. Die Ausgestaltung des Verfahrens für den technischen Maßstab kann durch den Fachmann auf üblichem Wege erfolgen.

In einer besonders bevorzugten Ausführungsform des erfindungsgemäßen Verfahrens wird der Verfahrensschritt b) in einer Kaskade aus mindestens 2 hintereinandergeschalteten Verdampfern, von denen mindestens einer ein Kurzwegverdampfer ist, durchgeführt. Vorzugsweise sind alle Verdampfer der Kaskade Kurzwegverdampfer. Es können bis zu 20 Verdampfer in Reihe geschaltet werden. Die Verwendung einer größeren Anzahl von Verdampfern verteuert das Verfahren, ohne dass es zu einer verbesserten Reinigung kommt. Bevorzugt werden 2 bis 10 und insbesondere 2 bis 5 Verdampfer hintereinandergeschaltet werden. Die Verwendung von einer Kaskade ist insbesondere dann vorteilhaft, wenn die Prepolymere aus 2 Isocyanaten mit unterschiedlicher Verdampfungstemperatur eingesetzt werden. Auch bei Diisocyanaten, die nur schwer zu niedrigen Monomergehalten abgereinigt werden können, wie 2,4-MDI, kann eine Kaskade zu einer besseren Reinigung führen.

In den Verdampfern können gleiche oder unterschiedliche Drücke und Temperaturen eingestellt werden.

Ein weiterer Vorteil bei der Verwendung von Verdampferkaskaden ist, dass die technischen Anforderungen an die Vakuum erzeugenden Einheiten geringer sind als bei der Verwendung nur eines Verdampfers.

Die erfindungsgemäßen Isocyanatgruppen und Urethangruppen enthaltenden Prepolymere können, wie oben dargestellt, durch Umsetzung von Polyisocyanaten mit Verbindungen mit mindestens zwei mit Isocyanatgruppen reaktiven Wasserstoffatomen hergestellt werden.

Als Polyisocyanate kommen 2,4'-Diphenylmethan-diisocyanat, Mischungen aus 2,4'- und 4,4'-Diphenylmethandiisocyanat, Mischungen aus 2,4'-, 2,2'- und 4,4'-Diphenylmethan-diisocyanaten und Polyphenyl-polymethylen-polyisocyanaten (Roh-MDI), Als Isocyanatkomponente können auch die Derivate von den genannten Isocyanaten, wie Uretdion, Harnstoff, Biuret oder Isocyanurat und Mischungen daraus eingesetzt werden.

Als Verbindungen mit mindestens zwei mit Isocyanatgruppen reaktiven Wasserstoffatomen werden Polyetheralkohole eingesetzt.

Die Polyetheralkohole weisen vorzugsweise eine Funktionalität im Bereich von 2 bis 8 auf. Ihre Herstellung erfolgt üblicherweise durch Anlagerung von Alkylenoxiden, insbesondere Ethylenoxid und/oder Propylenoxid, an H-funktionelle Startsubstanzen. Die Alkylenoxide können dabei einzeln, nacheinander oder als Mischung eingesetzt werden. Als Startsubstanzen kommen beispielsweise Wasser, Diole, Triole, höherfunktionelle Alkohole, Zuckeralkohole, aliphatische oder aromatische Amine oder Aminoalkohole in Betracht.

Besonders geeignet sind Polyetheralkohole mit einem mittleren Molekulargewicht zwischen 500 und 3000 g/mol und einer mittleren OH-Funktionalität von 2 bis 3. Besonders bevorzugte Startsubstanzen zur Herstellung dieser Polyetheralkohole sind Propylenglykol und Glyzerin. Bevorzugte Alkylenoxide sind Ethylenoxid und Propylenoxid.

Als Katalysatoren, welche insbesondere die Reaktion zwischen den NCO-Gruppen der Diisocyanate und den Hydroxylgruppen der Polyalkohole beschleunigen, können die nach dem Stand der Technik bekannten und üblichen stark basischen Amine sowie organische Metallverbindungen wie Titansäureester, Eisenverbindungen wie z.B. Eisen-(III)-acetylacetonat, zinnverbindungen, z.B. Zinn-(II)-Salze von organischen Carbonsäuren, oder die Dialkylzinn-(IV)-Salze von organischen Carbonsäuren oder Gemische mit mindestens zwei der genannten Katalysatoren sowie synergistisch wirkende Kombinationen aus stark basischen Aminen und organischen Metallverbindungen eingesetzt werden. Die Katalysatoren können in üblichen Mengen, beispielsweise 0,002 bis 5 Gew.-%, bezogen auf die Polyalkohole, verwendet werden.

Die Umsetzung kann kontinuierlich oder diskontinuierlich in üblichen Reaktoren, beispielsweise bekannten Rohr- oder Rührkesselreaktoren, bevorzugt in Gegenwart von üblichen Katalysatoren, die Reaktion der OH-funktionellen Verbindungen mit den Isocyanatgruppen beschleunigen, sowie gegebenenfalls inerten Lösungsmitteln, d.h. gegenüber den Isocyanaten und OH-funktionellen Verbindungen nicht reaktiven Verbindungen, erfolgen.

Überraschend wurde festgestellt, dass Prepolymere auf Basis von 2,4'-MDI eine deutlich niedrigere Produktviskosität aufweisen als analoge Prepolymere auf der Basis von 4,4'-MDI. Es wurden Viskositätsunterschiede bis zu 50 % gefunden.

So wiesen ein NCO-Prepolymer, das unter Verwendung eines Polyetheralkohols mit einem Molekulargewicht von 1965 g/mol auf der Basis von Propylenglykol und Propylenoxid mit einem NCO-Gehalt von 5,5 Gew.-% bei Verwendung von 2,4'-MDI eine Viskosität von 6366 mPa·s bei 25°C und bei Verwendung von 4,4'-MDI eine Viskosität von 10261 mPa·s auf.

Ein NCO-Prepolymer, das unter Verwendung eines Polyetheralkohols mit einem Molekulargewicht von 1965 g/mol auf der Basis von Propylenglykol und Propylenoxid (Polyol 1) mit einem NCO-Gehalt von 4,3 Gew.-% bei Verwendung von 2,4'-MDI eine Viskosität von 4283 mPa·s bei 25°C und bei Verwendung von 4,4'-MDI eine Viskosität von 12793 mPa·s bei 25°C auf.

Die erfindungsgemäßen Isocyanatgruppen und Urethangruppen enthaltenden Prepolymere werden üblicherweise zur Herstellung von Polyurethanen eingesetzt. Dazu werden die Isocyanatgruppen und Urethangruppen enthaltenden Prepolymere mit Verbindungen, die mit Isocyanatgruppen reagieren können, umgesetzt. Bei den Verbindungen, die mit Isocyanatgruppen reagieren können, handelt es sich beispielsweise um Wasser, Alkohole, Amine oder Verbindungen mit Mercaptogruppen. Die Polyurethane können Schaumstoffe, Beschichtungen, Klebstoffe, insbesondere Schmelzklebstoffe, Anstrichstoffe sowie kompakte oder zellige Elastomere sein. Bei der Anwendung als Dicht- oder Klebstoffe erfolgt das Aushärten zum fertigen Polyurethan im einfachsten Fall durch Einwirkung von Luftfeuchtigkeit.

Die erfindungsgemäßen Prepolymere können vorzugsweise auch zur Herstellung von Polyurethan-Folien, insbesondere solchen für den Lebensmittelbereich, eingesetzt werden. Hierfür, ebenso wie für den Einsatz als Schmelzklebstoffe, insbesondere Heißschmelzklebstoffe, Beschichtungen oder Dichtungen sind Prepolymere auf Basis von 2,4'-MDI besonders geeignet.

Die Erfindung soll in nachfolgenden Ausführungsbeispielen näher erläutert werden.

Die Untersuchungen wurden an Isocyanatgruppen und Urethangruppen enthaltenden Prepolymeren auf Basis von Methylendi-(phenylisocyanat) oder Toluylendiisocyanat durchgeführt. Die Prepolymere wurden in bekannter Weise bei 80°C in einer Versuchsapparatur, bestehend aus einem beheizbaren Glasreaktor mit Rührer, Temperaturmessanzeige, Rückflusskühler, Inertgaszuführung (Stickstoff) und externer Heizung, synthetisiert (Tabelle 1).

**Tabelle 1**

| | Prepolymer 1 n.e. | Prepolymer 2 | Prepolymer 3 n.e. |
|---|---|---|---|
| Zusammensetzung | 4,4'-MDI Polyol 1 | 2,4'-MDI Polyol 1 | Lupranat^{®} T 80 A*) Polyol 1 |
| NCO-Gehalt [Gew.-%] | 5,5 | 5,2 | 6,3 |
| Viskosität bei 25 °C [mPa·s] | 10261 | 6400 | 2560 |
| Diisocyanat-Monomer-Gehalt [Gew.-%] **) | 7,6 | 6,8 | 6,5 |

| | | | |
|---|---|---|---|
| *) Lupranat^{®} T 80 A (BASF; 80 % 2,4'-Toluylendiisocyanat und 20 % 2,6'- Toluylendiisocyanat) **) bestimmt mittels HPLC n.e.nicht erfindungsgemäß | | | |

Für die Entfernung der Monomeren wurden jeweils 1000 g Prepolymer gemäß Tabelle 1 in das Vorlagegefäß einer Kurzwegverdampfer-Apparatur vom Typ VKL 70 der Firma VTA Verfahrenstechnische Anlagen GmbH Deggendorf, die eine Verdampferfläche von 0,04 m2 aufwies und für einem Durchsatz von 0,1 bis 2 1/h ausgelegt war, dosiert und auf 80°C (Prepolymer 1) bzw. 60°C (Prepolymer 2) temperiert. Verdampfer und Kondensator wurden auf die in Tabelle 2 angegebene Solltemperatur vorgeheizt. Bei laufendem Rührwerk, eingestelltem Vakuum und vorgegebener Durchflussgeschwindigkeit wurde das monomerhaltige Prepolymer aus dem Vorlagegefäß über den Kurzwegverdampfer gegeben. Es wurden nach dem beschriebenen Verfahren Prepolymere mit einem Rest-Monomer-Gehalt von kleiner 0,05 Gew.-% hergestellt. Weiterhin wurde ein Monomer gewonnen, das eine Reinheit von größer 97 % aufwies. Nach dem erfindungsgemäßen Verfahren zur Herstellung von Prepolymeren wurde ein Isocyanat-Monomer erhalten, das ohne einen zusätzlichen Aufarbeitungsschritt wieder zur Herstellung der Prepolymere verwendet werden kann.

**Tabelle 2**

| | | Prepolymer 1 n.e. | Prepolymer 3 n.e. |
|---|---|---|---|
| Destillationsparameter | | | |
| Vakuum | [mbar] | 0,03 | 0,02 |
| Durchflussgeschwindigkeit | [1/h] | 0,17 | 0,27 |
| Rührerdrehzahl | [U/min] | 415 | 410 |
| Temperatur Vorlagebehälter | [°C] | 80 | 60 |
| Temperatur Verdampfer | [°C] | 120 | 80 |
| Temperatur Kondensator | [°C] | 50 | 20 |
| NCO-Gehalt | [Gew.-%] | | |
| Vor der Kurzwegdestillation | | 5,5 | 6,3 |
| Nach der Kurzwegdestillation | | 2,6 | 3,5 |
| Isocyanat-Monomer-Gehalt **) | [%] | | |
| Vor der Kurzwegdestillation | | 7,6 | 6,5 |
| Nach der Kurzwegdestillation | | 0,02 | 0,01 |
| Viskosität des Prepolymeren bei 25 °C | [mPa·s] | | |
| Vor der Kurzwegdestillation | | 10261 | 2560 |
| Nach der Kurzwegdestillation | | 23483 | 5385 |
| Farbzahl | [Iod] | | |
| Vor der Kurzwegdestillation | | 0,1 | 0,1 |
| Nach der Kurzwegdestillation | | 0,2 | 0,1 |

| | | | |
|---|---|---|---|
| **) bestimmt mittels HPLC n.e.nicht erfindungsgemäß | | | |

In Tabelle 3 wird die Monomerentfernung mittels eines einzelnen Verdampfers und mittels einer Verdampferkaskade verglichen. Die Prepolymere 4 und 5 wurden nach Beispiel 1 aus 2,4-MDI und Polyol 1 hergestellt. Prepolymer 4 hatte nach der Herstellung einen NCO-Gehalt von 5,3 Gew.-%, eine Viskosität bei 25°C von 7887 mPa·s und einen Diisocyanat-Monomergehalt von 6,8 Gew.-%. Prepolymer 5 hatte nach der Herstellung einen NCO-Gehalt von 5,6 Gew.-%, eine Viskosität von 6768 mPa·s bei 25°C und einen Gehalt an monomerem Diisocyanat von 7,4 Gew.-%.

**Tabelle 3**

| | | Prepolymer 4 | Prepolymer 5 |
|---|---|---|---|
| Destillationsparameter | | | |
| Vakuum | [mbar] | 0,01 | 0,5 // 0,07 |
| Durchflussgeschwindigkeit | [1/h] | 160 | 160 // 60 |
| Rührerdrehzahl | [U/min] | 410 | 410 |
| Temperatur Vorlagebehälter | [ °C ] | 80 | 80 |
| Temperatur Verdampfer 1 | [ °C ] | 120 | 120 |
| Temperatur Verdampfer 2 | [ °C ] | - | 120 |
| Temperatur Kondensator 1 | [ °C ] | 50 | 50 |
| Temperatur Kondensator 2 | [ °C ] | - | 50 |
| NCO-Gehalt | [ Gew.-% ] | | |
| Vor der Destillation | | 5,3 | 5,6 |
| Nach Verdampfer-Einheit 1 | | 3,6 | 3,9 |
| Nach Verdampfer-Einheit 2 | | - | 3,3 |
| Isocyanat-Monomer-Gehalt | [ Gew.-% ] | | |
| Vor der Destillation | | 6,8 | 7,4 |
| Nach Verdampfer-Einheit 1 | | 0,10 | 2,53 |
| Nach Verdampfer-Einheit 2 | | - | 0,03 |
| Viskosität bei 25°C | [mPa·s] | | |
| Vor der Destillation | | 7868 | 6768 |
| Nach Verdampfer-Einheit 1 | | 12941 | 8188 |
| Nach Verdampfer-Einheit 2 | | - | 11724 |
| Farbzahl | [Iod] | | |
| Vor der Destillation | | 9,0 | 2,4 |
| Nach Verdampfer-Einheit 1 | | 10,8 | 5,6 |
| Nach Verdampfer-Einheit 2 | | - | 7,4 |

Das Prepolymer 5 wurde in einer Verdampferkaskade mit zwei hintereinandergeschalteten Verdampfer-Einheiten entmonomerisiert:
Verdampfer-Einheit 1: Kurzwegverdampfer
Verdampfer-Einheit 2: Kurzwegverdampfer
Beide Kurzwegverdampfer waren vom gleichen Typ. Durch den Einsatz einer Verdampferkaskade an Stelle einer einzelnen Verdampfer-Einheit wurde eine deutliche Verbesserung bei der Monomerenabtrennung erzielt.

Als Vergleich wurde Monomerentfernung mittels Lösungsmittelextraktion und Hochdruck-Extraktion mit überkritischem Kohlendioxid durchgeführt.

### Vergleichsbeispiel A)

Entmonomerisierung von Prepolymeren durch Extraktion mit n-Hexan im Kutscher-Steudel-Extraktor (Perforator)

Die Ergebnisse sind in Tabelle 4 festgehalten.

**Tabelle 4**

| | | 4.4'-MDI n.e. | 2.4'-MDI |
|---|---|---|---|
| Polyetheralkohol | | Polyol1 | |
| NCO-Gehalt | [Gew.-%] | | |
| Vor der Extraktion | | 5,5 | 5,6 |
| Nach der Extraktion | | 3,0 | 3,3 |
| MDI-Monomer-Gehalt | [%] **) | | |
| Vor der Extraktion | | 7,3 | 7,6 |
| Nach der Extraktion | | 1,0 | 0,6 |
| Viskosität des Prepolymeren bei 25° C | [mPa·s] | | |
| Vor der Extraktion | | 7947 | 6366 |
| Nach der Extraktion | | 21096 | 10517 |
| Farbzahl | [Iod] | | |
| Vor der Extraktion | | 1,0 | 2,4 |
| Nach der Extraktion | | 8,8 | 14,0 |

| | | | |
|---|---|---|---|
| **) bestimmt mittels HPLC n.e. nicht erfindungsgemäß | | | |

Die Lösungsmittelextraktion hatte folgende Nachteile: Die extraktive Abtrennung von hohen MDI-Monomer-Gehalten erforderte lange Extraktionszeiten, bei denen das MDI-Prepolymer einer thermischen Belastung ausgesetzt war. Dies zeigte sich in der Erhöhung der Farbzahl.

Der Monomergehalt lag deutlich über 0,1 Gew.-%.

### Vergleichsbeispiel B

Entmonomerisierung von MDI-Prepolymeren durch Hochdruck-Extraktion mittels überkritischem Kohlendioxid

Parameter:

| | |
|---|---|
| Verhältnis Prepolymer zu Kohlendioxid | 1 : 7 |
| Temperatur im Extraktor | 63°C |
| Druck im Extraktor | 220 bar |
| Temperatur im Monomer-Abscheider | 60°C |
| Druck im Monomer-Abscheider | 55 bar |
| Temperatur im Kohlendioxid-Kondensator | 13°C |
| Druck im Kohlendioxid-Kondensator | 56 bar |

Vergleich der beiden Verfahren Extraktion mit überkritischem Kohlendioxid und Kurzwegverdampfer-Destillation

Die Prepolymere wurden nach der allgemeinen Vorschrift unter Verwendung von 4,4'-MDI und Polyol 1 hergestellt.

****) bestimmt mittels HPLC**

| | | Hochdruck-Extraktion mit überkritischem Kohlendioxid | Kurzwegverdampfer-Destillation |
|---|---|---|---|
| NCO-Gehalt | [Gew.-%] | | |
| Vor dem Prozess | | 5,4 | 5,5 |
| Nach dem Prozess | | 2,7 | 2,9 |
| MDI-Monomer-Gehalt | [%] **) | | |
| Vor dem Prozess | | 7,7 | 7,6 |
| Nach dem Prozess | | 0,28 | 0,04 |
| Viskosität des Prepolymere | | | |
| bei 25°C | [mPa.s] | | |
| Vor dem Prozess | | 11928 | 10261 |
| Nach dem Prozess | | 20472 | 18392 |
| Farbzahl | [Iod] | | |
| Vor dem Prozess | | 0,1 | 0,1 |
| Nach dem Prozess | | 0,5 | 0,2 |

Nachteil der Extraktion mit überkritischem Kohlendioxid: Die Löslichkeit des als Extraktionsmittel verwendeten Kohlendioxides beträgt im MDI-Prepolymer bis zu 0,4 Gew.-% und im MDI-Monomer bis zu 0,1 Gew.-%. Dies macht zumeist einen zusätzlichen Verarbeitungsschritt zur Produktentgasung erforderlich.

## Patentansprüche

1. Verfahren zur Herstellung von Isocyanatgruppen und Urethangruppen enthaltenden Prepolymeren, umfassend die Schritte
a) Reaktion von 2,4'-Diphenylmethandiisocyanat oder Mischungen von 2,4'-Diphenylmethandiisocyanat und 4,4'-Diphenylmethandiisocyanat oder Mischungen von 2,4'-, 2,2'- und 4,4'-Diphenylmethandiisocyanat und Polyphenylpolymethylenpolyisocyanaten mit einem stöchiometrischen Unterschuss eines Polyetheralkohols,
b) Entfernung der monomeren Diisocyanate durch Destillation des Reaktionsprodukts aus Schritt a) mittels eines Kurzwegverdampfers.

2. Verfahren nach Anspruch 1, **dadurch gekennzeichnet, dass** die Destillation in Schritt b) in einer Verdampferkaskade aus mindestens 2 hintereinandergeschalteten Verdampfern durchgeführt wird.

3. Verfahren nach Anspruch 1, **dadurch gekennzeichnet, dass** Schritt b) bei einem Vakuum von 10 bis 10⁻³ mbar durchgeführt wird.

4. Verfahren nach Anspruch 1, **dadurch gekennzeichnet, dass** Schritt b) bei einer Temperatur im Verdampfer von 50 bis 210°C und einer Temperatur im Kondensator von 15 bis 55°C durchgeführt wird.

5. Isocyanatgruppen und Urethangruppen enthaltende Prepolymere, herstellbar nach einem der Ansprüche 1 bis 4.

6. Isocyanatgruppen und Urethangruppen enthaltenden Prepolymere nach Anspruch 5, **dadurch gekennzeichnet, dass** sie einen Gehalt an monomeren Diisocyanaten von kleiner oder gleich 0,1 Gew.-%, bezogen auf das Gewicht des Prepolymeren bezogen, aufweisen.

7. Isocyanatgruppen und Urethangruppen enthaltende Prepolymere nach Anspruch 5, **dadurch gekennzeichnet, dass** sie einen Gehalt an monomeren Diisocyanaten von kleiner 0,05 Gew.-%, bezogen auf das Gewicht des Prepolymeren, aufweisen.

8. Verwendung von Isocyanatgruppen und Urethangruppen enthaltenden Prepolymere nach Anspruch 5 bis 7 zur Herstellung von Polyurethanen.

9. Verwendung von Isocyanatgruppen und Urethangruppen enthaltenden Prepolymere nach Anspruch 5 bis 7 zur Herstellung von Schmelzklebstoffen, Verpackungsfolien, Beschichtungen und Dichtstoffen.

## Claims

1. A process for the preparation of prepolymers comprising isocyanate and urethane groups, comprising the steps of
a) reacting diphenylmethane 2,4'-diisocyanate or mixtures of diphenylmethane 2,4'-diisocyanate and diphenylmethane 4,4'-diisocyanate or mixtures of diphenylmethane 2,4'-diisocyanate, diphenylmethane 2,2'-diisocyanate and diphenylmethane 4,4'-diisocyanate and polyphenylpolymethylene polyisocyanates with a stoichiometric deficency of a polyether alcohol,
b) removing the monomeric diisocyanates by distilling the reaction product from step a) by means of a short-path evaporator.

2. The process according to claim 1, wherein the distillation in step b) is carried out in an evaporator battery composed of at least two evaporators connected in series.

3. The process according to claim 1, wherein step b) is carried out at from 10 to 10⁻³ mbar.

4. The process according to claim 1, wherein step b) is carried out at a temperature in the evaporator of from 50 to 210°C and a temperature in the condenser of from 15 to 55°C.

5. A prepolymer comprising isocyanate and urethane groups, obtainable according to any of claims 1 to 4.

6. A prepolymer comprising isocyanate and urethane groups according to claim 5, comprising monomeric diisocyanates at less than or equal to 0.1% by weight, based on the weight of the prepolymer.

7. A prepolymer comprising isocyanate and urethane groups according to claim 5, comprising monomeric diisocyanates at less than 0.05% by weight, based on the weight of the prepolymer.

8. The use of prepolymers comprising isocyanate and urethane groups according to claims 5 to 7 for the preparation of polyurethanes.

9. The use of prepolymers containing isocyanate and urethane groups according to claims 5 to 7 for the preparation of melt-applied adhesives, packaging films, coatings and sealants.

## Revendications

1. Procédé de fabrication de prépolymères contenant des groupements isocyanate et uréthanne, comprenant les étapes suivantes :
a) on fait réagir le diisocyanate de 2,4'-diphényl-méthane, ou des mélanges de diisocyanate de 2,4'-diphénylméthane et de diisocyanate de 4,4'-diphénylméthane, ou des mélanges de diisocyanate de 2,4'-, 2,2'- et 4,4'-diphénylméthane et de polyphénylpolyméthylène-polyisocyanates avec un polyétheralcool en quantité inférieure à la quantité stoechiométrique,
b) on élimine les diisocyanates monomères en distillant le produit réactionnel obtenu à l'étape a) à l'aide d'un évaporateur à trajet court.

2. Procédé selon la revendication 1, **caractérisé en ce que** l'on effectue la distillation à l'étape b) dans une cascade d'évaporateurs constituée d'au moins deux évaporateurs montés en série.

3. Procédé selon la revendication 1, **caractérisé en ce que** l'on réalise l'étape b) sous un vide de 10 à 10⁻³ mbars.

4. Procédé selon la revendication 1, **caractérisé en ce que** l'on réalise l'étape b) à une température dans l'évaporateur de 50 à 210 °C et à une température dans le condenseur de 15 à 55 °C.

5. Prépolymères contenant des groupements isocyanate et uréthanne, que l'on peut préparer selon l'une quelconque des revendications 1 à 4.

6. Prépolymères contenant des groupements isocyanate et uréthanne selon la revendication 5, **caractérisés en ce qu'**ils présentent une teneur en diisocyanates monomères inférieure ou égale à 0,1 % en poids par rapport au poids du prépolymère.

7. Prépolymères contenant des groupements isocyanate et uréthanne selon la revendication 5, **caractérisés en ce qu'**ils présentent une teneur en diisocyanates monomères inférieure à 0,05 % en poids par rapport au poids du prépolymère.

8. Utilisation de prépolymères contenant des groupements isocyanate et uréthanne selon l'une quelconque des revendications 5 à 7, pour la fabrication de polyuréthannes.

9. Utilisation de prépolymères contenant des groupements isocyanate et uréthanne selon l'une quelconque des revendications 5 à 7, pour la fabrication de colles fusibles, de feuilles d'emballage, de revêtements et de masses d'étanchéité.
